# EUROPEAN PATENT APPLICATION

(11) **EP 4 464 411 A1**
(43) Date of publication of application: **20.11.2024**
(21) Application number: 23877712.2
(22) Date of filing: 12.10.2023
(51) Int. Cl.: B01J 35/00, B01J 23/75, B01J 21/02, B01J 35/60, C01B 32/162

(54) **CATALYST FOR PRODUCING CARBON NANOTUBE**

(30) Priority: 13.10.2022 KR 20220131672
(71) Applicant: LG Chem, Ltd., Yeongdeungpo-gu Seoul 07336 (KR)
(72) Inventor: KIM, Eui Tae, Daejeon 34122 (KR); LEE, Eun Jeong, Daejeon 34122 (KR); KIM, Ki Hwan, Daejeon 34122 (KR); OH, Eu Gene, Daejeon 34122 (KR); PARK, Sung Eun, Daejeon 34122 (KR); LEE, Geun Sung, Daejeon 34122 (KR)
(74) Representative: Goddar, Heinz J.
(86) International application number: PCT/KR2023/015755
(87) International publication number: WO 2024/080789

(57) **Abstract**

The present invention relates to a catalyst for manufacturing carbon nanotubes, which includes a support, a first active layer formed on a surface of the support, and a second active layer formed on a surface of the first active layer, wherein the first active layer includes cobalt oxide and the second active layer includes aluminum oxide, and a method for manufacturing carbon nanotubes, using the catalyst described above, and the catalyst of the present invention enables more uniform and efficient synthesis of small-diameter carbon nanotubes.

## Description

### TECHNICAL FIELD

### Cross-reference to Related Applications

This application claims the benefit of Korean Patent Application No. 10-2022-0131672, filed on October 13, 2022, in the Korean Intellectual Property Office, the disclosure of which is incorporated herein in its entirety by reference.

### Technical Field

The present invention relates to a novel catalyst for manufacturing carbon nanotubes, which has an active layer structure in which two different metals, specifically aluminum and cobalt, are alternately stacked, and thus allows small-diameter carbon nanotubes to be obtained uniformly with high yield even when a small amount of catalyst is used, and a method for manufacturing carbon nanotubes, using the catalyst described above.

### BACKGROUND ART

Carbon nanomaterials are categorized by their shape: fullerenes, carbon nanotubes (CNTs), graphene, and graphite nanoplates, and in particular, the carbon nanotubes are macromolecules made out of nano-sized, rolled-up sheets of graphite with the hexagonal honeycomb network where one carbon atom is coupled with three carbon atoms.

The carbon nanotubes are lightweight due to their inner hollow space, and have electrical conductivity as good as that of copper, thermal conductivity as good as that of diamond, and tensile strength as good as that of steel. The carbon nanotubes are also categorized by how they are rolled up: single-walled carbon nanotubes (SWCNTs), multi-walled carbon nanotubes (MWCNTs), or rope carbon nanotubes.

Lately, research on carbon nanotube synthesis techniques for synthesizing a great deal of carbon nanotubes at a time has been actively ongoing, and among various methods, chemical vapor deposition (CVD) using a fluidized bed reactor allows a large amount of carbon nanotubes to be synthesized with ease and thus has been considered to be the most preferred choice in real industrial fields.

Specifically, in the method of chemical vapor deposition, a catalyst for manufacturing carbon nanotubes in the form of particles is charged into a fluidized bed reactor, and then carbon source gases and flowing gases are injected into the fluidized bed reactor to suspend the catalyst. Thereafter, the reactor is heated to decompose the carbon source gases on a surface of the suspended catalyst, resulting in synthesized carbon nanotubes.

In the process of manufacturing carbon nanotubes using this chemical vapor deposition method, the activity of the catalyst serves as a primary factor in determining the productivity of the overall manufacturing process, and accordingly, active research on catalysts with higher activity and methods for manufacturing the catalysts is underway. The most commonly used method as a typical method for manufacturing a catalyst is impregnation where a support is immersed in a solution in which a precursor of an active ingredient is dissolved and thus the precursor of the active ingredient is placed inside and on a surface of the support and then dried and calcined to manufacture catalyst particles. The impregnation is a simple process and provides easy mass production of catalysts and thus is beneficial, but has limitations in uniformly distributing the active ingredient on the support, and the non-uniformity of the active ingredient accordingly deteriorates the uniformity of physical properties of carbon nanotubes that are ultimately manufactured. In particular, given the recent rise in demand for high-quality carbon nanotubes for use as conductive materials, there remains a need for research on new catalysts enabling the synthesis of higher-quality carbon nanotubes.

### Related Art Document

(Patent Document 1) KR 10-2020-0141772 A
(Patent Document 2) KR 10-2018-0101222 A

### DISCLOSURE OF THE INVENTION

### TECHNICAL PROBLEM

An aspect of the present invention provides a catalyst for manufacturing carbon nanotubes, which allows small-diameter carbon nanotubes to be obtained uniformly with high yield even when a small amount of catalyst is used, and a method for manufacturing carbon nanotubes, using the catalyst described above.

### TECHNICAL SOLUTION

To address the above-described tasks, the present invention provides a catalyst for manufacturing carbon nanotubes and a method for manufacturing carbon nanotubes, using the catalyst.

Specifically, (1) according to an aspect of the present invention, there is provided a catalyst for manufacturing carbon nanotubes, which includes a support, a first active layer formed on a surface of the support, and a second active layer formed on a surface of the first active layer, wherein the first active layer includes cobalt oxide, and the second active layer includes aluminum oxide.
(2) The present invention provides the catalyst according to (1) above, wherein the second active layer is thicker than the first active layer.
(3) The present invention provides the catalyst according to (1) or (2) above, wherein the catalyst further includes a third active layer formed between the first active layer and the surface of the support, and the third active layer includes aluminum oxide.
(4) The present invention provides the catalyst according to any one of (1) to (3) above, wherein the support is a metal oxide support having a hydroxyl group on the surface thereof.
(5) The present invention provides the catalyst according to any one of (1) to (4) above, wherein the support has a specific surface area of 1 to 300 m²/g.
(6) The present invention provides the catalyst according to any one of (1) to (5) above, wherein the support has a number average particle size of 0.5 to 100 µm.
(7) The present invention provides the catalyst according to any one of (1) to (6) above, wherein the support is at least one selected from the group consisting of aluminum oxide, silicon oxide, hydrotalcite, and boehmite.
(8) The present invention provides the catalyst according to any one of (1) to (7) above, wherein the catalyst has a coverage rate of 10% to 50%.
(9) The present invention provides the catalyst according to any one of (1) to (8) above, wherein the catalyst has the active layers in a total amount of 1 to 40 wt%.
(10) The present invention provides the catalyst according to any one of (1) to (9) above, wherein the first active layer and the second active layer have a thickness of 0.5 to 5 nm.
(11) According to another aspect of the present invention, there is provided a method for manufacturing carbon nanotubes, which includes charging the catalyst according to any one of (1) to (10) above into a reactor (S1), injecting a carbon source gas into the reactor (S2), and heating the reactor (S3).

### ADVANTAGEOUS EFFECTS

In a catalyst for manufacturing carbon nanotubes according to the present invention, two or more types of metals are included in different active layers and the active layers have a stack structure, and thus interaction between respective active layers stabilizes surfaces of the active layers, thereby suppressing aggregation of active ingredients, and accordingly, the active ingredients may be uniformly distributed on a surface of a support. Therefore, when using the catalyst of the present invention, small-diameter carbon nanotubes may be manufactured uniformly, and in particular, a great deal of carbon nanotubes may be synthesized even when only a small amount of catalyst is used.

### BRIEF DESCRIPTION OF THE DRAWINGS

FIG. 1 is an SEM image of carbon nanotubes manufactured using a catalyst according to Example 1 of the present invention;
FIG. 2 is an SEM image of carbon nanotubes manufactured using a catalyst according to Example 2 of the present invention;
FIG. 3 is an SEM image of carbon nanotubes manufactured using a catalyst according to Example 3 of the present invention;
FIG. 4 is an SEM image of carbon nanotubes manufactured using a catalyst according to Comparative Example 1 of the present invention;
FIG. 5 is an SEM image of carbon nanotubes manufactured using a catalyst according to Comparative Example 2 of the present invention; and
FIG. 6 is an SEM image of carbon nanotubes manufactured using a catalyst according to Comparative Example 3 of the present invention.

### MODE FOR CARRYING OUT THE INVENTION

Hereinafter, the present invention will be described in more detail.

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

### Catalyst for manufacturing carbon nanotubes

A catalyst used in a process of manufacturing carbon nanotubes using chemical vapor deposition is generally prepared using a method of impregnation. The manufacturing of a catalyst using the method of impregnation provides the benefit of being simple and economical, but in many cases, during the process of loading, active ingredients are not uniformly loaded on a surface of support particles, and accordingly, even when carbon nanotubes are synthesized using the catalyst prepared thereby, the carbon nanotubes fail to grow uniformly. Therefore, a catalyst that enables the synthesis of more uniform carbon nanotubes and a method for manufacturing the same are greatly needed, and accordingly, the present invention provides a novel catalyst for manufacturing carbon nanotubes, which allows carbon nanotubes to be uniformly synthesized with high quality.

Specifically, the present invention provides a catalyst for manufacturing carbon nanotubes, which includes a support, a first active layer formed on a surface of the support, and a second active layer formed on a surface of the first active layer, wherein the first active layer includes cobalt oxide, the second active layer includes aluminum oxide, and the second active layer is thicker than the first active layer.

The catalyst provided by the present invention is manufactured using atomic layer deposition (ALD) instead of typical impregnation methods, and the catalyst of the present invention may be manufactured by forming a thin and uniform active layer on a surface of the support through the method of ALD.

Hereinafter, the catalyst for manufacturing carbon nanotubes according to the present invention will be described in more detail.

### Support

The catalyst for manufacturing carbon nanotubes according to the present invention is manufactured using a method of atomic layer deposition, and the method of atomic l ayer deposition is a method that allows an active layer to be uniformly formed even on a high specific surface area support having a 3D structure, and accordingly, the catalyst for manufacturing carbon nanotubes according to the present invention includes a support having a high specific surface area.

Specifically, the support included in the catalyst for manufacturing carbon nanotubes according to the present invention may be a metal oxide support having a hydroxyl group on the surface thereof. When a hydroxyl group is present on the surface of the support, it is favorable for atomic layer deposition. In addition, the support may have a specific surface area of 1 to 300 m²/g, preferably 10 to 200 m²/g, and have a number average particle size of 0.5 to 100 um, preferably 1 to 20 um. When the physical properties of the support satisfy the conditions described above, a large amount of catalyst components may be applied and also the mechanical strength of the support itself may be maintained.

In addition, the support may have a bulk density of 0.05 to 1 g/cc, preferably 0.1 to 0.5 g/cc. When the bulk density of the support is within the range described above, favorably a large amount of active ingredient may be applied with respect to the volume of the support, thereby increasing the activity of catalyst.

More specifically, the support may be at least one selected from the group consisting of aluminum oxide (Al₂O₃), silicon oxide (SiO₂), hydrotalcite, and boehmite. The types of supports described above are beneficial in that strong interaction with a catalyst maintains the dispersion of catalyst particles during the growth of carbon nanotubes, allowing carbon nanotubes having a uniform diameter to be manufactured with high yield, and thus are particularly suitable for use as supports in the method for preparing a catalyst of the present invention.

### Active layer

The catalyst for manufacturing carbon nanotubes according to the present invention includes a first active layer formed on a surface of the support described above, a second active layer formed on a surface of the first active layer, and optionally a third active layer formed between the first active layer and the surface of the support.

In addition, the first active layer may include cobalt oxide and the second active layer may include aluminum oxide, and the second active layer may be thicker than the first active layer. The optionally included third active layer may include the same aluminum oxide as the second active layer, and may also be thicker than the first active layer. More specifically, the first to third active layers may each have a thickness of 0.5 to 5 nm, preferably 0.5 to 2 nm.

In the present invention, it is determined that an active layer is formed on the support described above using a method of atomic layer deposition, but when a stack structure instead of a single layer structure is applied as the active layer, a synergistic effect resulting from the interaction of different metal oxides included in each layer takes place. Specifically, when cobalt oxide is stacked as the first active layer and aluminum oxide is stacked as the second active layer, the aluminum oxide in the second active layer improves the surface stability of cobalt oxide that exhibits catalytic activity to suppress aggregation of cobalt oxide in the first active layer, and accordingly, the cobalt oxide in the active layer is uniformly distributed to enable small-diameter carbon nanotubes to be synthesized more uniformly.

Meanwhile, the active layer of the present invention may optionally include a third active layer formed between the first active layer and the surface of the support, and the third active layer may include aluminum oxide. When forming the third active layer first and then forming the first and second active layers before the forming of the first and second active layers, favorably, the interaction between aluminum oxide and cobalt oxide is further strengthened, and thus cobalt oxide may be distributed more uniformly.

In addition, the first active layer containing cobalt oxide may further include at least one metal oxide selected from the group consisting of V, Fe, and Mo to further improve the catalytic activity of cobalt component. V, Fe, and Mo are promoter components known to improve the catalytic activity of cobalt upon synthesizing carbon nanotubes, and the catalytic activity is further increased by including the above components along with cobalt oxide in the first active layer, and accordingly, yield in the process of manufacturing carbon nanotubes may be improved.

The first to third active layers of the catalyst for manufacturing carbon nanotubes provided by the present invention may be formed through the method of atomic layer deposition as described above, and due to the nature of the atomic layer deposition, an active layer having a certain thickness may be formed per cycle and the number of cycles above may be regulated within an appropriate range to control the thickness of the active layer appropriately. In particular, in the present invention, the first to third active layers may preferably have a thickness of 0.5 nm to 5 nm, particularly preferably 0.5 nm to 2 nm, and when the thickness of the active layer is within the range described above, it is favorable to manufacture small-diameter carbon nanotubes by keeping the overall particle diameter of catalyst particles small. In addition, at the same active layer thickness, with an increase in the amount of catalyst, catalyst coverage rate which will be described later may increase, and thus the catalyst coverage rate may be increased by making the active layer thin with respect to the same amount of catalyst, and the increase in the catalyst coverage rate may lead to a rise in yield of catalyst. In addition, in the first and second active layers, it may be preferable that the second active layer containing aluminum oxide is thicker than the first active layer containing cobalt oxide, and when the relationship between the thicknesses of respective active layers satisfies these conditions, the surface of catalyst particles may become more stable to keep the diameter of catalyst particles smaller. Even when the third active layer containing aluminum oxide is further included, the third active layer may preferably be thicker than the first active layer.

In terms of the coverage rate described above, the catalyst may have a coverage rate of 10% to 90%, preferably 20% to 70%. A high catalyst coverage rate indicates a great deal of active ingredients distributed on the surface of the support, and the higher the catalyst coverage rate, the greater the catalyst yield. The catalyst coverage rate provided by the present invention is at least 10%, preferably 20% or greater, and considering that the coverage rate of catalysts prepared through typical impregnation methods is approximately 20% or less, the catalyst coverage rate provided by the present invention is significantly higher than that of typical catalysts, and the catalyst of the present invention may have such a high coverage rate to enable carbon nanotubes to be manufactured with high yield. Meanwhile, the "coverage rate" may be calculated by dividing catalyst amount by (catalyst layer (coating layer) thickness * specific surface area of support * theoretical true density of catalyst), and in the present invention in which a plurality of active layers are present, the thickness of the catalyst layer (coating layer) may be the sum of all the thicknesses of the included active layers. In the equation above, the theoretical true density of catalyst indicates a theoretical value known as the density of catalyst active components.

Meanwhile, with respect to a total weight of the catalyst, the active layer may be in a total amount of 1 to 40 wt%, preferably 5 to 20 wt%. The total amount of the active layer refers to the sum of the active layer amounts of multiple layers. A total amount value of the active layer is similar or lower than that of typical catalysts manufactured using the method of impregnation, and this indicates that the catalyst for manufacturing carbon nanotubes according to the present invention may exhibit outstanding catalytic activity even with an appropriate amount of active ingredients. When the amount of the active layer is less than the range described above, an absolute amount of the active layer component itself may be insufficient to reduce the catalytic activity, and when the amount of the active layer is too large, the costs of catalyst manufacturing processes rise while improvements in catalyst activity are insignificant or the activity declines, resulting in no economic feasibility.

### Method for manufacturing carbon nanotubes

The present invention provides a method for manufacturing carbon nanotubes, using the catalyst for manufacturing carbon nanotubes described above. Specifically, the present disclosure provides a method for manufacturing carbon nanotubes, which includes charging the catalyst into a reactor (S1), injecting a carbon source gas into the reactor (S2), and heating the reactor (S3).

The catalyst of the present invention is particularly suitable for use in the process of manufacturing carbon nanotubes through chemical vapor deposition, and thus carbon nanotubes may be manufactured through the process described above.

The reactor used in the present invention is not particularly limited as long as the reactor is suitable for manufacturing carbon nanotubes using a method of chemical vapor deposition, and a cylindrical fluidized bed reactor commonly used in the carbon nanotube industry may be used as the reactor. The cylindrical fluidized bed reactor is beneficial in that the temperature inside the reactor is easily maintained to be uniform.

An amount of catalyst introduced in the process of S1 is not particularly limited, and a person skilled in the art may determine an appropriate input amount of catalyst by considering the volume or shape of the reactor. The amount of catalyst introduced is supposed to be at a level that both sufficiently carries on carbon nanotube synthesis reactions and sufficiently secures the internal temperature of the reactor. Meanwhile, when the input amount of catalyst is excessive, the productivity of overall process of manufacturing carbon nanotubes may be reduced.

A carbon source gas injected in the process of S2 is decomposed on a surface of the previously introduced catalyst to form carbon nanotubes. Specific examples of the carbon source gas may include various carbon-containing compounds such as aliphatic alkanes, aliphatic alkenes, aliphatic alkynes, and aromatic compounds, and more specific examples of the carbon source gas may include compounds such as methane, ethane, ethylene, acetylene, ethanol, methanol, acetone, carbon monoxide, propane, butane, benzene, cyclohexane, propylene, butene, isobutene, toluene, xylene, cumene, ethylbenzene, naphthalene, phenanthrene, anthracene, acetylene, formaldehyde, and acetaldehyde.

In addition to the carbon source gas, a flowing gas may be injected along with the carbon source gas for improving catalyst fluidity inside the reactor, and for example, nitrogen gas or an inert gas may be used as the flowing gas.

The carbon source gas introduced in the process of S2 above is decomposed on a surface of catalyst particles through heating in the subsequent process of S3 to form carbon nanotubes. Carbon nanotubes are manufactured by growing from catalyst particles, and thus the structural characteristics of the formed carbon nanotubes may be determined according to the diameter or size of catalyst particles. Meanwhile, heating in the present process may be performed such that the temperature inside the reactor is 600 °C to 900 °C, preferably 650 °C to 800 °C. When the temperature inside the reactor is within the range described above, carbon nanotubes may be synthesized well while minimizing thermal decomposition of catalyst particles.

Carbon nanotubes manufactured through the catalyst for manufacturing carbon nanotubes according to the present invention may be single-walled carbon nanotubes (SWCNTs) or few-walled carbon nanotubes (FWCNTs). The catalyst of the present invention is relatively small in size, and accordingly, carbon nanotubes formed therefrom may also be relatively small in size. In addition, carbon nanotubes manufactured through the catalyst for manufacturing carbon nanotubes according to the present invention may be bundle-type carbon nanotubes. An active layer is uniformly formed on a catalyst surface of the present invention, and thus carbon nanotube strands growing therefrom grow to have the same orientation, and accordingly, the carbon nanotubes manufactured from the catalyst of the present invention may be bundle-type carbon nanotubes in which several strands of carbon nanotubes are aligned in one direction to form a bundle.

Hereinafter, the present invention will be described in detail with reference to Examples and Experimental Examples, but the present invention is not limited by these Examples and Experimental Examples. Examples according to the present invention may be modified into other various forms, and the scope of the present invention should not be construed as being limited to the Examples described below. Examples of the present invention are provided to more fully describe the present invention to those skilled in the art.

### Material

Hydrotalcite having a specific surface area of 160 m²/g and a number average particle size of 3.6 um was dried for 10 hours in a vacuum chamber heated to 120 °C and pretreated to have a moisture content of 10 ppm or less. A catalyst precursor for forming cobalt oxide was bis(N-tert-butyl-N'-ethylpropionamidinato) cobalt(II) (CoAMD), and a catalyst precursor for forming aluminum oxide was trimethyl aluminum (TMA). In the following process, purging was performed with 100 sccm of nitrogen gas.

### Example 1

### (1) Forming first active layer

Pretreated hydrotalcite was applied th be thin and even on a glass substrate, using a blade coater. Thereafter, the substrate was placed in a reactor, treated under reduced pressure of 1 torr, and then heated to 200 °C. After the heating was completed, 50 sccm of nitrogen gas was injected into the CoAMD heated to 90 °C, and concurrently, CoAMD was pulse-injected into the reactor for 600 seconds and then purged for 300 seconds. Then, water vapor was pulse-injected for 3 seconds and purged again for 300 seconds. This process was considered 1 cycle and repeated 10 cycles to form a first active layer containing cobalt oxide on a surface of a support. The first active layer formed in this case had a thickness of 0.6 nm.

### (2) Forming second active layer

After the first active layer was formed through the previous process, TMA cooled to 20 °C was pulse-injected for 3 seconds. After the TMA injection was completed, purging was performed for 300 seconds. Water vapor was pulse-injected for 3 seconds as a reaction gas with TMA, and purged for 300 seconds in the same manner as the previous process. This process was considered 1 cycle and repeated 8 cycles to form a second active layer containing aluminum oxide on a surface of the first active layer. The second active layer formed in this case had a thickness of 1 nm.

### Example 2

Before the forming of the first active layer in Example 1, a third active layer containing aluminum oxide was first formed on the surface of the support by repeating 8 cycles in the same process as the process of forming the second active layer. Thereafter, the first active layer and the second active layer were formed in the same manner as in Example 1 to prepare a catalyst stacked in the order of the third active layer, first active layer, and second active layer from the support surface.

### Example 3

In Example 1, the number of repeated cycles for the process of forming the first active layer and the second active layer was varied to provide a first active layer having a thickness of 0.3 nm and a second active layer having a thickness of 1 nm.

### Comparative Example 1

Co(NO₃)·2H₂O (5 g) was dissolved in 100 ml of water to prepare an immersion solution, and then the same hydrotalcite support used in Example 1 was immersed in the immersion solution. Thereafter, the resulting product was dried at 100 °C and then calcined in an atmosphere of 600 °C to obtain catalyst particles.

### Comparative Example 2

In Example 1, catalyst particles including a first active layer containing cobalt oxide were obtained without a second active layer.

### Comparative Example 3

In Example 1, a second active layer was first formed, and then a first active layer was formed, so that an aluminum oxide active layer was formed on the surface of the support and a cobalt oxide active layer was formed on the aluminum oxide active layer. That is, in Comparative Example 3, the first active layer included aluminum oxide and the second active layer included cobalt oxide.

The characteristics of the catalysts prepared in Examples and Comparative Examples are shown in Table 1 below.

**[Table 1]**

| | | Example 1 | Example 2 | Example 3 | Comparat ive Example 1 | Comparat ive Example 2 | Comparat ive Example 3 |
|---|---|---|---|---|---|---|---|
| Synthesis method | | ALD | ALD | ALD | Impregna tion method | ALD | ALD |
| Firs t acti ve laye r | Met al | Co | Co | Co | - | Co | Al |
| | Thi ckn ess | 0.6 nm | 0.6 nm | 0.3 nm | | 0.6 nm | 1 nm |
| Seco nd acti ve laye r | Met al | Al | Al | Al | | - | Co |
| | Thi ckn ess | 1 nm | 1 nm | 1 nm | | - | 0.6 nm |
| Thir d acti ve laye r | Met al | - | Al | - | | - | - |
| | Thi ckn ess | - | 1 nm | - | | - | - |

### Experimental Example 1. Determination of characteristics of catalyst

The characteristics of the catalysts prepared in Examples and Comparative Examples were determined through the following method.
1) Catalyst amount (active layer amount): Catalyst amount was determined through ICP component analysis, and 0.1 g of catalyst particles were dissolved in 1 ml of hydrochloric acid and then diluted 10 times and subjected to ICP-OES analysis.
   Measuring instrument: ICP-OES Agilent 5110
   Measuring conditions: RF Power 1300 W, Torch Height 15 mm, Plasma gas flow 15 L/min, Sample Gas flow 0.8 L/min, Aux. Gas flow 0.2 L/min, Pump Speed 1.5 ml/min
2) Coverage rate: Coverage rate was calculated using the previously measured catalyst amount, catalyst layer thickness, specific surface area of support, and catalyst density, and the following equation was used therefor. Coverage rate = Catalyst amount / (Catalyst layer thickness * Specific surface area of support * Theoretical true density of catalyst)
3) Yield: Weight of manufactured carbon nanotubes against input amount of catalyst particles (including both active layer and support) was measured and the multiple was calculated.
4) Amount of manufactured carbon nanotubes against input amount of catalyst: Weight of manufactured carbon nanotubes against amount of catalyst of the input catalyst particles (active layer amount excluding support) was measured, and the multiple was calculated.

Meanwhile, in the measuring of the yield and the manufactured carbon nanotubes against input amount of catalyst, carbon nanotube synthesis was performed through a method of synthesizing carbon nanotubes by placing 10 mg of catalyst in a tube furnace and injecting 500 sccm of nitrogen gas, 200 sccm of hydrogen gas, and 50 sccm of ethylene gas at 670 °C for 90 minutes.

The measured values for respective characteristics are shown in Table 2 below.

**[Table 2]**

| | Example 1 | Example 2 | Example 3 | Compara tive Example 1 | Compara tive Example 2 | Compara tive Example 3 |
|---|---|---|---|---|---|---|
| Catalyst amount (wt%) | 15 | 11 | 7.9 | 30 | 17 | 15 |
| Coverage rate (%) | 50 | 50 | 50 | 20 | 50 | 50 |
| Yield | 1.47 | 0.68 | 0.95 | 3.6 | 0.97 | 0.17 |
| Amount of manufactur ed carbon nanotubes against input amount of catalyst | 9.8 | 6.2 | 12 | 7.2 | 5.7 | 1.1 |

As seen in Table 2, the catalysts according to Examples of the present invention showed satisfactory yield and amount of manufactured nanotubes. In particular, the catalysts according to Examples 1 to 3 of the present invention had a similar or greater level of amount of manufactured nanotube against the input amount of catalyst compared to the catalyst of Comparative Example 1 prepared through a typical impregnation method, and performed well overall in yield and amount of manufactured carbon nanotubes against the input amount of catalyst compared to Comparative Examples 2 and 3 manufactured through ALD but with no inclusion of the second coating layer, or rather containing aluminum oxide in the first coating layer and cobalt oxide in the second coating layer.

### Experimental Example 2. Determination of characteristics of carbon nanotubes manufactured from catalysts

Carbon nanotubes were synthesized using the catalysts prepared in Examples and Comparative Examples above. Specifically, 10 mg of catalyst was placed in a tube furnace and 500 sccm of nitrogen gas, 200 sccm of hydrogen gas, and 50 sccm of ethylene gas were injected at 670 °C for 90 minutes to synthesize carbon nanotubes.

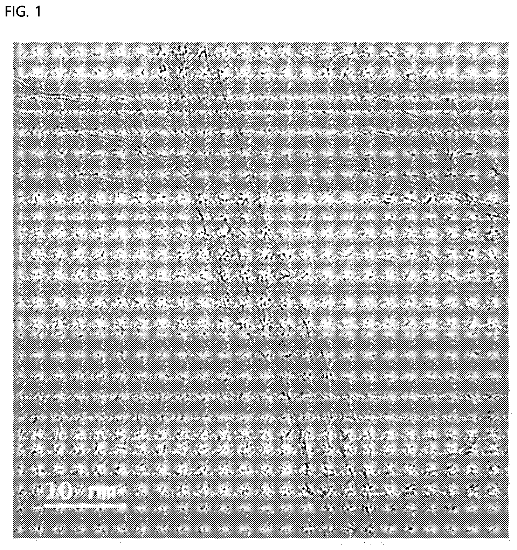

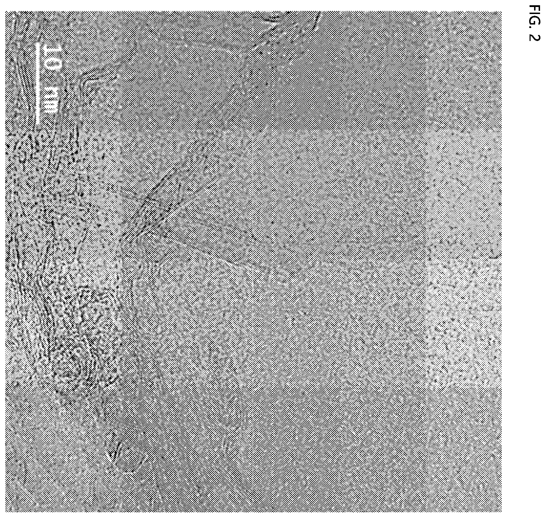

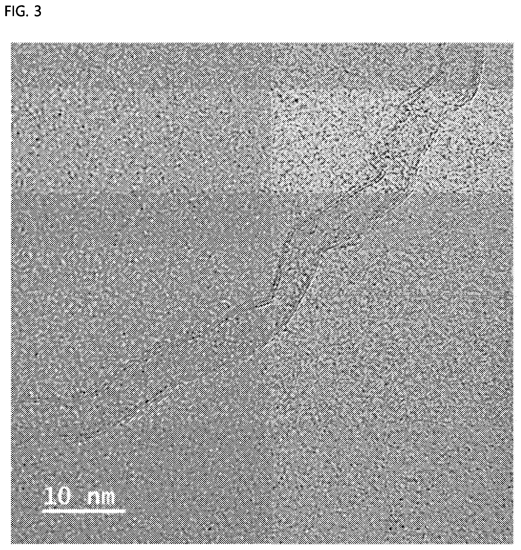

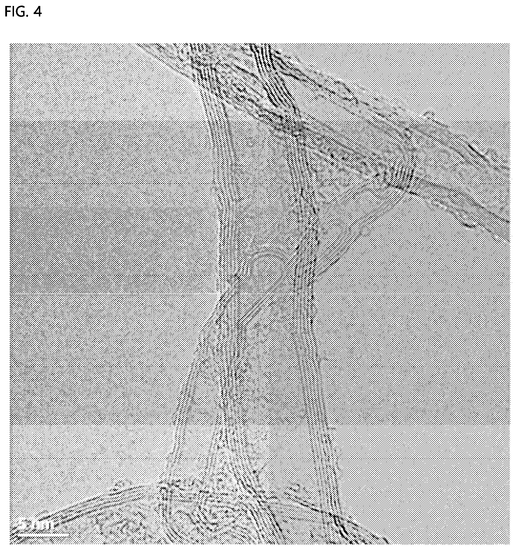

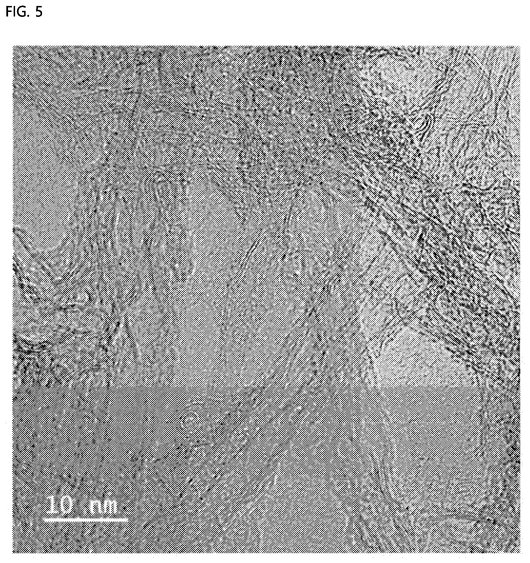

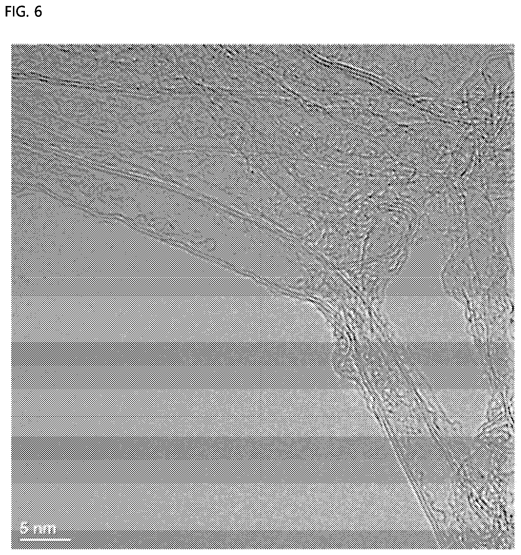

The diameter and number of walls of the synthesized carbon nanotubes were measured and shown in Table 3 below, and SEM images of respective carbon nanotubes are shown in FIGS. 1 to 6. SEM image observation was performed using JSM-7610F (JEOL), and the diameter and number of walls were directly measured from TEM images after observation.

**[Table 3]**

| | Example 1 | Example 2 | Example 3 | Compara tive Example 1 | Compara tive Example 2 | Compara tive Example 3 |
|---|---|---|---|---|---|---|
| Diameter (nm) | 4.3 | 5.4 | 4.7 | 7.21 | 5.28 | 5.71 |
| No. of walls | 2 | 3 | 3 | 6 | 3 | 5 |

As seen in Table 3 and FIGS. 1 to 6, when the catalyst of Example of the present invention was used, small-diameter carbon nanotubes having a small number of walls were synthesized, and when the catalyst of Comparative Example was used, relatively large-diameter carbon nanotubes having a large number of walls were synthesized. When carbon nanotubes are formed to have a small diameter and a small number of walls, the carbon nanotubes, even in a small amount, exhibit high electrical conductivity, and thus are beneficial.

## Claims

1. A catalyst for manufacturing carbon nanotubes, the catalyst comprising:
a support;
a first active layer formed on a surface of the support; and
a second active layer formed on a surface of the first active layer,
wherein the first active layer comprises cobalt oxide, and
the second active layer comprises aluminum oxide.

2. The catalyst of claim 1, wherein the second active layer is thicker than the first active layer.

3. The catalyst of claim 1, further comprising a third active layer formed between the first active layer and the surface of the support,
wherein the third active layer comprises aluminum oxide.

4. The catalyst of claim 1, wherein the support is a metal oxide support having a hydroxyl group on the surface thereof.

5. The catalyst of claim 1, wherein the support has a specific surface area of 1 to 300 m²/g.

6. The catalyst of claim 1, wherein the support has a number average particle size of 0.5 to 100 µm.

7. The catalyst of claim 1, wherein the support is at least one selected from the group consisting of aluminum oxide, silicon oxide, hydrotalcite, and boehmite.

8. The catalyst of claim 1, wherein the catalyst has a coverage rate of 10% to 50%.

9. The catalyst of claim 1, wherein the catalyst has the active layers in a total amount of 1 to 40 wt%.

10. The catalyst of claim 1, wherein the first active layer and the second active layer have a thickness of 0.5 to 5 nm.

11. A method for manufacturing carbon nanotubes, the method comprising:
charging the catalyst of claim 1 into a reactor (S1);
injecting a carbon source gas into the reactor (S2); and
heating the reactor (S3).
